# EUROPÄISCHE PATENTSCHRIFT

(11) **EP 1 338 452 B1**
(45) Veröffentlichungstag und Bekanntmachung des Hinweises auf die Patenterteilung: **27.10.2010**
(21) Anmeldenummer: 03450045.4
(22) Anmeldetag: 18.02.2003
(51) Int. Cl.: B60J 7/047

(54) **Personenkraftwagen mit variablem Dach**
Passenger vehicle with variable roof
Véhicule automobile avec toit variable

(30) Priorität: 21.02.2002 AT 1122002 U
(43) Veröffentlichungstag der Anmeldung: 27.08.2003
(73) Patentinhaber: Magna Steyr Fahrzeugtechnik AG & Co KG, 8041 Graz (AT)
(72) Erfinder: Hartl, Karl, 8045 Graz (AT)
(74) Vertreter: Harringer, Thomas

(56) Entgegenhaltungen:
- EP-A- 0 989 009
- EP-A- 1 006 013
- DE-C- 10 025 051
- FR-A- 2 694 245
- US-A1- 2002 003 359

## Beschreibung

Die Erfindung betrifft Personenkraftwagen mit variablem Dach, wobei das Dach aus mindestens zwei an ihren Seiten verschiebbar geführten steifen Tafeln besteht. Die Variabilität geht damit über die eines Schiebedaches weit hinaus. Sie soll nicht nur ein Öffnen über den Vordersitze gestatten, sondern auch über den Hintersitzen und über dem Laderaum, um auch hohe Lasten unterbringen zu können.

Aus der EP 1 084 882 A2 ist ein Personenkraftwagen mit variablem Dach bekannt, dessen hinterer Dachteil zur Schaffung eines hohen Laderaumes um eine Querachse abwärts schwenkbar ist. Über den Vordersitzen ist zusätzlich noch ein Schiebedach vorgesehen, das aber nicht mit dem hinteren Dachteil zusammenwirkt. Die Schwenkbarkeit des hinteren Dachteiles begrenzt dessen Dimension in Fahrzeuglängsrichtung (sein achsferner Punkt beschreibt beim Schwenken eine Kreisbahn) und erlaubt es nicht, das ganze Dach des Fahrzeuges zu öffnen.

Aus der gattungsbildenden DE 100 25 05 C1 ist ein aus mehreren miteinander gekoppelten Tafeln bestehendes Dach bekannt, dessen Tafeln rückwärts verschiebbar und der Reihe nach ungefähr vertikal im Kofferraum verstaubar sind. Sie nehmen dort einen erheblichen Teil des Kofferraumvolumens in Anspruch, wodurch keine Ladefläche geschaffen, sondern im Gegenteil diese sogar vermindert wird.

Es ist Ziel der Erfindung, ein variables Dach vorzuschlagen, das bei größter Raumökonomie verschiedene Öffnungsstellungen gestattet: nur vorne oder nur hinten oder ganz geöffnet. Erfindungsgemäß wird das dadurch erreicht, dass aus der geschlossenen Ausgangsstellung:
a) Eine erste Tafel vorwärts-abwärts in eine angenähert vertikale Stellung verschiebbar geführt ist, in der sie eine Trennwand beispielsweise zwischen den Vordersitzen und einer Ladefläche bildet. So erhält man eine geschlossene "Fahrerkabine" und eine offene Ladefläche.
b) Eine davor angeordnete zweite Tafel angenähert horizontal rückwärts verschiebbar geführt ist, bis sie sich (von oben gesehen) ungefähr mit der ersten Tafel deckt.
c) Die zweite Tafel mit der ersten Tafel verbindbar und mit dieser gemeinsam vorwärts-abwärts verschiebbar ist. So ist die Ladefläche und die "Fahrerkabine" offen.

Dabei können auch mehrere erste Tafeln vorgesehen sein. Dank dieser Merkmale kann das Dach in drei verschiedenen Modi geöffnet werden. Dabei kann die hintere Tafel sehr groß dimensioniert sein und ist trotzdem in vertikaler Stellung verstaubar, wobei sie zusätzlich noch als Trennwand wirkt.

In einer vorteilhaften Ausbildung werden diese Bewegungsmöglichkeiten dadurch realisiert, dass (Anspruch 2):
a) die erste Tafel beiderseits vordere und hintere erste Führungselemente hat, die in fahrzeugfesten ersten Führungen verschiebbar sind, welche vorwärts-abwärts reichen, womit auch eine Verschiebung in einer nicht geradlinigen Führung möglich ist,
b) die zweite Tafel zweite Führungselemente hat, und in angenähert horizontalen zweiten fahrzeugfesten Führungen an den Seitenteilen des Fahrzeugkörpers nach hinten verschiebbar ist,
c) die erste Tafel dritte Führungen hat, die an die zweiten Führungen anschließen und in die die zweiten Führungselemente der zweiten Tafel einschiebbar sind. Die erste Tafel kann so die zweite Tafel gewissermaßen "Huckepack" nehmen. Dabei müssen die zweiten und dritten Führungen selbst nicht direkt aneinander anschließen; es muss nur der Lage der Führungselemente Rechnung getragen und dafür gesorgt sein, dass die Tafel nicht führungslos wird.

In Weiterbildung der Erfindung ist es vorteilhaft, wenn die hinteren ersten Führungselemente der ersten Tafel in horizontalen Teilen der ersten Führungen und die vorderen ersten Führungselemente in abwärts gerichteten Teilen der ersten Führungen geführt sind (Anspruch 3). Dadurch ist die vorwärts-abwärts - Bewegung am einfachsten zu erreichen. Die Führungen können durchlaufend und gebogen sein, oder Oberteil und Unterteil sind getrennt. Die Führungselemente können so nach Art eines Ellipsenzirkels auf Geraden geführt sein und doch eine hinsichtlich Raum- und Kraftbedarf optimierte Schiebe- - Schwenkbewegung ausführen. Zudem sind gerade Führungen billiger in Herstellung und Montage, insbesondere dann, wenn die zweiten Führungen an den Seitenwänden des Fahrzeugkörpers befestigte Schienen sind (Anspruch 4). Diese können auf beiden Seiten zueinander parallel sein.

Der Versteifung der Seitenwände des Fahrzeugkörpers kann es förderlich sein, die Seitenwände durch einen Querspant miteinander zu verbinden, der in Dachhöhe in der Nähe der Vorderkante der ersten Tafel in geschlossener Stellung angeordnet ist (Anspruch 5). Das erhöht auch die Präzision der parallelen an den Seitenwänden befestigten Führungen.

Für das Zusammenwirken der ersten mit der zweiten Tafel gibt es zwei besonders vorteilhafte Lösungen: Entweder, die erste Tafel hat abwärts gerichtete Seitenflansche, an denen die ersten Führungselemente angebracht sind, und sind die dritten Führungen an der Innenseite der Seitenflansche angebracht (Anspruch 6), sodass die zweite Tafel von der ersten aufgenommen wird, in ihr gewissermaßen verschwindet. Oder, alternativ, die erste Tafel hat die dritten Führungen für die zweite Tafel an ihrer oberen Seite, das ist die Aussenseite (Anspruch 7).

Prinzipiell kann die Trennwand hinter den Vordersitzen oder auch hinter den Rücksitzen gebildet werden. Die erwünschte Variabilität ist am größten, wenn die erste Tafel in der geöffneten Endstellung hinter den Vordersitzen steht (Anspruch 8). Dabei ist es auch vor Vorteil, wenn die Tafeln weitgehend oder im Wesentlichen aus Glas bestehen. Dadurch sind auch in abgesenkter Stellung der ersten Tafel die Sichtverhältnisse (nach hinten) nicht eingeschränkt.

Zur Förderung der passiven Sichtverhältnisse ist am hinteren Rand der ersten Tafel eine Leuchte angebracht, die bei geschlossenem Dach rückwärts und abwärts strahlt (Anspruch 10), und ergo bei vertikaler Stellung der ersten Tafel rückwärts und aufwärts. Dabei ist insbesondere an die neuerdings vorgeschriebene hochgestellte Bremsleuchte gedacht, die so in beiden Stellungen der ersten Tafel ihre Aufgabe erfüllt.

Im folgenden wird die Erfindung anhand von Abbildungen beschrieben und erläutert. Es stellen dar:
- Fig. 1:: das erfindungsgemäße Fahrzeug mit geschlossenem Dach,
- Fig. 2:: dasselbe in einem ersten Öffnungszustand,
- Fig. 3:: dasselbe in einer Übergangsstellung,
- Fig. 4:: dasselbe in einem zweiten Öffnungszustand,
- Fig. 5:: einen Querschnitt nach VV in Fig. 2, vergrößert,
- Fig. 6:: eine Variante zu Fig. 5.

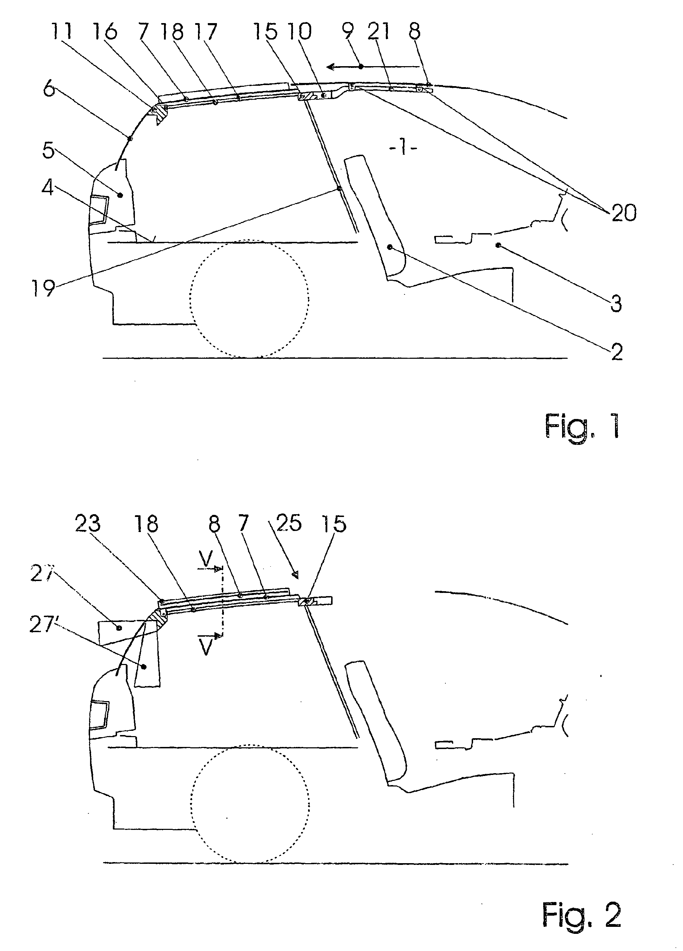

In **Fig. 1** ist der Fahrzeugkörper 1 durch die Kontur einer Seitenwand angedeutet. Weiters ist eine Mittelkonsole 3 und die Rückenlehne eines Vordersitzes 2 angedeutet. Hinter diesem kann sich eine weitere, gegebenenfalls umlegbare Reihe von Rücksitzen befinden, hier ist nur eine hintere Ladefläche 4 eingezeichnet, die hinten von einer Heckklappe 5 mit einer einziehbaren Heckscheibe 6 abgeschlossen ist.

Das variable Dach besteht aus einer ersten Dachtafel 7 und zumindest einer davor befindlichen zweiten Dachtafel 8, im gezeigten Ausführungsbeispiel ist es nur eine. Der Pfeil 9 deutet an, dass die zweite Dachtafel 8 nach hinten verschiebbar ist.

Die beiden Seitenwände 1 sind in Dachhöhe mit einem horizontalen Querspant 10 verbunden. Die erste Dachtafel 7 besitzt vordere (15) und hintere (16) erste Führungselemente 15, 16, die in insgesamt mit 17 bezeichneten ersten Führungen verschiebbar sind. Die Führungen sind Schienen, die an beiden Seitenwänden 1 befestigt sind. In besonders einfachen Einbausituationen können sie parallel und spiegelgleich sein. Die Schienen 17 führen mit ihrem vorderen Teil abwärts hinter die Rückenlehne des Vordersitzes.

Im gezeigten Ausführungsbeispiel bestehen die Führungen 17 aus getrennten Teilen, einem ungefähr horizontalen oberen Teil 18 und einem geraden abwärts führenden Teil 19.

Die zweite Dachtafel 8 hat an ihren seitlichen Rändern zweite Führungselemente 20, die in zweiten Führungen 21 verschiebbar sind. Diese sind an den Seitenwänden 1 des Fahrzeugkörpers befestigte parallele Schienen. Sie enden so, dass sie hinten an dritte Führungen 23 und 123 anschließen, welche an der ersten Dachtafel 7 befestigt sind, und zwar so, dass die zweite Dachtafel von den zweiten Führungen 21 in die dritten Führungen übertreten kann (Pfeil 9).

Die Dachtafeln 7, 8 bestehen aus einem durchsichtigen Werkstoff, beispielsweise Glas. Sie können rahmenlos sein oder einen Rahmen haben. In Fig. 1 sind die vorderen und hinteren ersten Führungselemente 15, 16 als über die ganze Breite der Dachtafel verlaufende Randleisten ausgebildet. Das hintere Führungselement 16, zugleich Randleiste, trägt weiters eine rückwärtige Leuchte 11, die so ausgebildet ist, dass sie zwei Strahlenbündel aussendet (siehe Fig.2) eines nach hinten (27), eines nach unten (27'), worauf noch zurückzukommen ist.

**Fig. 2** zeigt eine erste Öffnungsstellung, in der das Dach über den Vordersitzen geöffnet, über dem Laderaum aber geschlossen ist. In dieser Stellung ist die zweite Dachtafel 8 soweit zurückgeschoben, dass sie sich ungefähr, von oben gesehen, mit der ersten Dachtafel 7 deckt. In dieser Stellung ist die zweite Dachtafel nicht mehr in den zweiten Führungen, sondern in den dritten an der ersten Dachtafel 7 angeordneten Führungen 23 und die beiden Dachtafeln 7,8 sind miteinander verbindbar. Die nächste Bewegung ist mit dem Pfeil 25 angedeutet. Die vorderen ersten Führungselemente 15 laufen in den abwärts führenden Teilen 19 und bewegen sich so abwärts. Die hinteren ersten Führungselemente 16 laufen in den oberen horizontalen Teilen 18 der ersten Führungen 17. Die ersten Führungen 17 können aber auch durchlaufende zuerst angenähert horizontale und dann entsprechend abwärts gebogene Schienen sein.

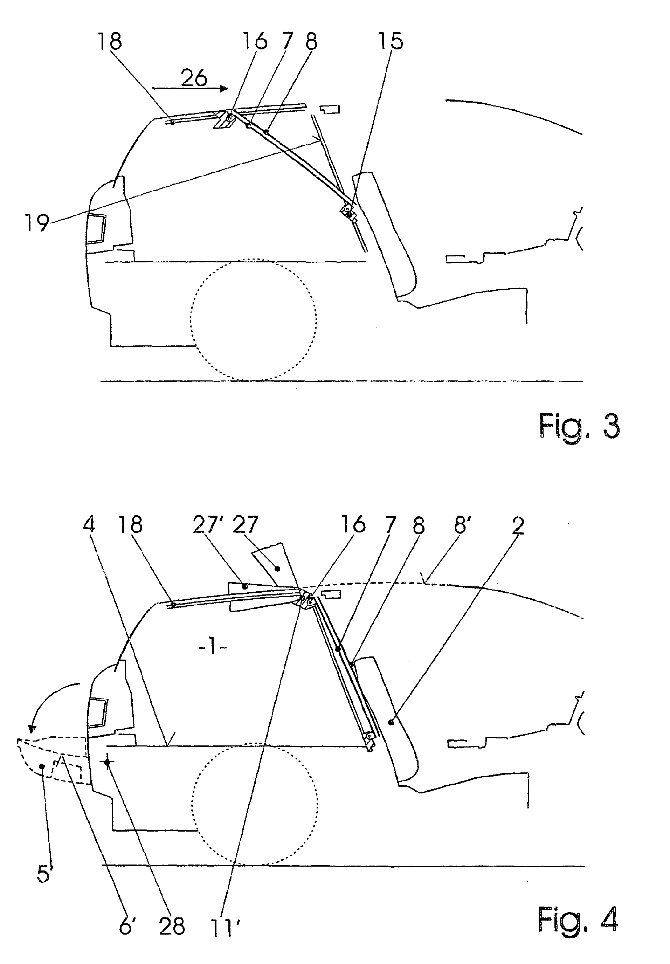

In dem Zwischenstadium der **Fig. 3** ist die Vorwärts-Abwärtsbewegung der beiden Dachtafeln 7,8 im Gange. Die hinteren ersten Führungselemente 16 sind im oberen Teil 18 der ersten Führung 17 geführt, die vordere im abwärts führenden Teil 19, bis schließlich die in Fig. 4 gezeigte Stellung erreicht ist. In dieser sind die beiden Dachtafeln 7,8 gemeinsam in einer schrägen bis vertikalen Stellung hinter der Rückenlehne der Vordersitze aufbewahrt. Zusätzlich aber bilden sie auch noch eine Trennwand zwischen dem vorderen Teil des Wageninneren und dem dahinter liegenden Laderaum. Auf diese Weise ist ein offener Laderaum geschaffen, der durch Abwärtsschwenken der Heckklappe 5 in die Stellung 5' und einziehen der Heckscheibe 6 in die Stellung 6'nach hinten vergrößert werden kann. Nebstbei: bei geschlossener Heckklappe 6 und erster Dachtafel 7 in der geschlossenen Stellung kann deren als Abschlußleiste ausgebildetetes Führungselement 16 an der Oberkante der Heckscheibe 6 dichtend anliegen.

Bei der Bewegung der beiden Dachtafeln 7,8 in die in **Fig. 4** gezeigte Stellung hat sich das hintere Führungselement 16 und die an ihm befestigte rückwärtige Leuchte 11 um einen näherungsweise rechten Winkel um die Fahrzeugquerachse gedreht. Die Leuchte befindet sich somit in der Stellung 11', in der nun das zweite Strahlenbündel 27' (dasjenige, das in Fig. 2 abwärts gerichtet war) nach hinten leuchtet. Auf diese Weise ist auch in der Stellung als Lieferwagen das heute vorgeschriebene obere Bremslicht vorhanden, ohne zusätzlichen Aufwand. Weiters ist in Fig. 4 noch die zweite Dachtafel 8 in ihrer vorderen Stellung 8' angedeutet. Die erfindungsgemäße Dachkonstruktion macht es nämlich auch möglich, die erste Dachtafel 7 alleine in die Staustellung der Fig. 4 zu bringen und den Raum über den Vordersitzen geschlossen zu halten.

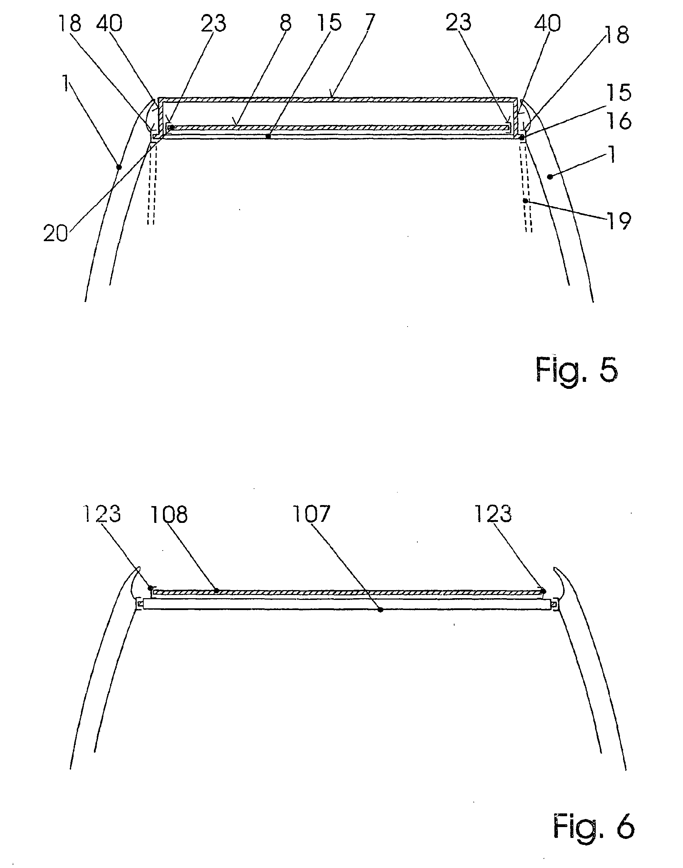

In **Fig. 5** ist die Variante zu sehen, in der die zweite Dachtafel 2 in der ersten Dachtafel 7 aufgenommen ist. Dazu hat die erste Dachtafel 7 abwärts gekantete Seitenflansche 40 (auf beiden Seiten), an die unten die Führungselemente 15, 16, zu sehen ist hier nur das vordere Führungselement 15, anschließen. Diese treffen in die ersten Führungen 17, hier deren horizontalen Teil 18. An der Innenseite der Seitenflansche 40 sind die dritten Führungen 23 befestigt, die die zweite Dachtafel 8 aufnehmen. Somit ist letztere in der in Fig.2 gezeigten Stellung vollkommen von der ersten Dachtafel 7 aufgenommen.

Die Variante der Fig.6 unterscheidet sich von der **Fig. 5** nur dadurch, dass die dritten Führungen 123 an der Oberseite der ersten Dachtafel 107 befestigt sind und die zweite Dachtafel 108 somit in der in Fig. 2 gezeigten Stellung über der ersten Dachtafel 107 gehalten ist.

## Patentansprüche

1. Personenkraftwagen mit variablem Dach, wobei das Dach aus mindestens zwei an ihren Seiten verschiebbar geführten steifen Tafeln besteht, **dadurch gekennzeichnet, dass** aus der geschlossenen Ausgangsstellung
a) eine erste Tafel (7) vorwärts-abwärts in eine angenähert vertikale Stellung verschiebbar geführt ist,
b) eine davor angeordnete zweite Tafel (8) angenähert horizontal rückwärts verschiebbar geführt ist, bis sie sich, von oben gesehen, ungefähr mit der ersten Tafel (7) deckt,
c) die zweite Tafel (8) mit der ersten Tafel (7) verbindbar und mit dieser gemeinsam vorwärts-abwärts in eine angenähert vertikale Stellung verschiebbar ist.

2. Personenkraftwagen mit variablem Dach nach Anspruch 1, **dadurch gekennzeichnet, dass**
a) die erste Tafel (7) beiderseits vordere (15) und hintere (16) erste Führungselemente (15,16) hat, die in fahrzeugfesten ersten Führungen (17) vorwärts-abwärts verschiebbar sind,
b) die zweite Tafel (8) zweite Führungselemente (20) hat, und in angenähert horizontalen zweiten fahrzeugfesten Führungen (21) nach hinten verschiebbar ist,
c) die erste Tafel (7) dritte Führungen (23) hat, die an die zweiten Führungen (21) anschließen und in die die zweiten Führungselemente (20) der zweiten Tafel (8) einschiebbar sind, sodass beide Tafeln (7,8) gemeinsam vorwärts-abwärts in eine angenähert vertikale Stellung verschiebbar sind.

3. Personenkraftwagen mit variablem Dach nach Anspruch 2, **dadurch gekennzeichnet, dass** die hinteren ersten Führungselemente (16) der ersten Tafel (7) in horizontalen Teilen (18) der ersten Führungen (17) und die vorderen ersten Führungselemente (15) in abwärts gerichteten Teilen (19) der ersten Führungen (17) geführt sind.

4. Personenkraftwagen mit variablem Dach nach Anspruch 3, **dadurch gekennzeichnet, dass** die zweiten Führungen (21) an den Seitenwänden (1) des Fahrzeugkörpers befestigte Schienen sind.

5. Personenkraftwagen mit variablem Dach nach Anspruch 4, **dadurch gekennzeichnet, dass** die Seitenwände (1) durch einen Querspant (10) miteinander verbunden sind, der in Dachhöhe in der Nähe der Vorderkante der ersten Tafel (7) in geschlossener Stellung angeordnet ist.

6. Personenkraftwagen mit variablem Dach nach Anspruch 2, **dadurch gekennzeichnet, dass** die erste Tafel (7) abwärts gerichtete Seitenflansche (40) hat, an denen die ersten Führungselemente (15,16) angebracht sind, und dass die dritten Führungen (23) an der Innenseite der Seitenflansche (40) angebracht sind.

7. Personenkraftwagen mit variablem Dach nach Anspruch 2, **dadurch gekennzeichnet, dass** die erste Tafel (7) an ihrer oberen Seite die dritten Führungen (123) für die zweite Tafel hat.

8. Personenkraftwagen mit variablem Dach nach Anspruch 1, **dadurch gekennzeichnet, dass** die erste Tafel (7) in der geöffneten Endstellung ungefähr vertikal hinter den Vordersitzen (2) steht.

9. Personenkraftwagen mit variablem Dach nach Anspruch 1, **dadurch gekennzeichnet, dass** die Tafeln (7,8) im Wesentlichen aus einem durchsichtigen Werkstoff bestehen.

10. Personenkraftwagen mit variablem Dach nach Anspruch 1, **dadurch gekennzeichnet, dass** am hinteren Rand der ersten Tafel (7) eine Leuchte (11) angebracht ist, deren Lichtkegel (27, 27') bei geschlossenem Dach rückwärts und abwärts strahlt.

## Claims

1. Passenger vehicle with a variable roof, wherein the roof consists of at least two stiff panels which are guided displaceably at the sides thereof, **characterized in that** from the closed starting position,
a) a first panel (7) is guided displaceably forwards-downwards onto an approximately vertical position,
b) a second panel (8) arranged in front thereof is guided displaceably approximately horizontally rearwards until said panel approximately coincides with the first panel (7), as seen from above,
c) the second panel (8) is connectable to the first panel (7) and is displaceable together therewith forwards-downwards into an approximately vertical position.

2. Passenger vehicle with a variable roof according to Claim 1, **characterized in that**
a) the first panel (7) has, on both sides, front first guide elements (15) and rear first guide elements (16) which are displaceable forwards-downwards into vehicle-mounted first guides (17),
b) the second panel (8) has second guide elements (20) and is displaceable to the rear in approximately horizontal, second, vehicle-mounted guides (21),
c) the first panel (7) has third guides (23) which adjoin the second guides (21) and into which the second guide elements (20) of the second panel (8) can be pushed such that the two panels (7, 8) are displaceable together forwards-downwards to an approximately vertical position.

3. Passenger vehicle with a variable roof according to Claim 2, **characterized in that** the rear first guide elements (16) of the first panel (7) are guided in horizontal parts (18) of the first guides (17), and the front first guide elements (15) are guided in downwardly directed parts (19) of the first guides (17).

4. Passenger vehicle with a variable roof according to Claim 3, **characterized in that** the second guides (21) are rails fastened to side walls (1) of the vehicle body.

5. Passenger vehicle with a variable roof according to Claim 4, **characterized in that** the side walls (1) are connected to each other by a transverse rib (10) which is arranged at roof height in the vicinity of the front edge of the first panel (7) in the closed position.

6. Passenger vehicle with a variable roof according to Claim 2, **characterized in that** the first panel (7) has downwardly directed side flanges (40) on which the first guide elements (15, 16) are fitted, and **in that** the third guides (23) are fitted on the inside of the side flanges (40).

7. Passenger vehicle with a variable roof according to Claim 2, **characterized in that** the upper side of the first panel (7) has third guides (23) for the second panel.

8. Passenger vehicle with a variable roof according to Claim 1, **characterized in that**, in the open end position, the first panel (7) stands approximately vertically behind the front seats (2).

9. Passenger vehicle with a variable roof according to Claim 1, **characterized in that** the panels (7, 8) are substantially composed of a transparent material.

10. Passenger vehicle with a variable roof according to Claim 1, **characterized in that** a lamp (11) is mounted on the rear edge of the first panel (7), the cone of light (27, 27') of which light beams rearwards and downwards when the roof is closed.

## Revendications

1. Véhicule automobile à toit variable, dans lequel le toit se compose d'au moins deux panneaux rigides guidés de façon déplaçable sur leurs côtés, **caractérisé en ce que**, à partir de la position initiale fermée:
a) un premier panneau (7) est guidé de façon déplaçable vers l'avant et vers le bas dans une position approximativement verticale,
b) un deuxième panneau (8) disposé devant celui-ci est guidé de façon déplaçable à peu près horizontalement vers l'arrière, jusqu'à ce que, vu du dessus, il recouvre sensiblement le premier panneau (7),
c) le deuxième panneau (8) peut être assemblé au premier panneau (7) et peut être déplacé, en même temps que celui-ci, vers l'avant et vers le bas dans une position approximativement verticale.

2. Véhicule automobile à toit variable selon la revendication 1, **caractérisé en ce que**
a) le premier panneau (7) comporte sur les deux côtés des premiers éléments de guidage (15, 16) avant (15) et arrière (16), qui sont déplaçables vers l'avant et vers le bas dans des premiers guidages (17) solidaires du véhicule,
b) le deuxième panneau (8) comporte des deuxièmes éléments de guidage (20), et est déplaçable vers l'arrière dans des deuxièmes guidages (21) sensiblement horizontaux solidaires du véhicule,
c) le premier panneau (7) comporte des troisièmes guidages (23), qui se raccordent aux deuxièmes guidages (21) et dans lesquels les deuxièmes éléments de guidage (20) du deuxième panneau (8) peuvent être introduits, de telle manière que les deux panneaux (7, 8) soient déplaçables ensemble vers l'avant et vers le bas dans une position approximativement verticale.

3. Véhicule automobile à toit variable selon la revendication 2, **caractérisé en ce que** les premiers éléments de guidage arrière (16) du premier panneau (7) sont guidés dans des parties horizontales (18) des premiers guidages (17) et les premiers éléments de guidage avant (15) sont guidés dans des parties orientées vers le bas (19) des premiers guidages (17).

4. Véhicule automobile à toit variable selon la revendication 3, **caractérisé en ce que** les deuxièmes guidages (21) sont des rails fixés sur les parois latérales (1) du corps du véhicule.

5. Véhicule automobile à toit variable selon la revendication 4, **caractérisé en ce que** les parois latérales (1) sont reliées l'une à l'autre par une membrure transversale (10), qui est disposée à la hauteur du toit, à proximité de l'arête avant du premier panneau (7) en position fermée.

6. Véhicule automobile à toit variable selon la revendication 2, **caractérisé en ce que** le premier panneau (7) comporte des joues latérales dirigées vers le bas (40), sur lesquelles les premiers éléments de guidage (15, 16) sont installés, et **en ce que** les troisièmes guidages (23) sont placés sur la face intérieure des joues latérales (40).

7. Véhicule automobile à toit variable selon la revendication 2, **caractérisé en ce que** le premier panneau (7) comporte sur sa face supérieure les troisièmes guidages (123) pour le deuxième panneau.

8. Véhicule automobile à toit variable selon la revendication 1, **caractérisé en ce que** le premier panneau (7) est dressé à peu près verticalement derrière les sièges avant (2) dans sa position finale ouverte.

9. Véhicule automobile à toit variable selon la revendication 1, **caractérisé en ce que** les panneaux (7, 8) sont constitués essentiellement d'un matériau transparent.

10. Véhicule automobile à toit variable selon la revendication 1, **caractérisé en ce qu'**une lampe (11) est installée sur le bord arrière du premier panneau (7), dont le cône de lumière (27, 27') est dirigé vers l'arrière et vers le bas lorsque le toit est fermé.
